# EUROPEAN PATENT APPLICATION

(11) **EP 1 104 193 A2**
(43) Date of publication of application: **30.05.2001**
(21) Application number: 00308891.1
(22) Date of filing: 09.10.2000
(51) Int. Cl.: H04N 7/16

(54) **Monitoring the viewing of broadcast programming**

(30) Priority: 29.11.1999 US 450130
(71) Applicant: Weinblatt, Lee S., Teaneck New Jersey 07666 (US)
(72) Inventor: Weinblatt, Lee S., Teaneck New Jersey 07666 (US)
(74) Representative: Beresford, Keith Denis Lewis

(57) **Abstract**

Broadcast programming is tested for holding power and total communication potential. In particular, commercials can be tested, prior to incurring the expense of having them broadcast to the public, for their effectiveness in keeping the viewer's attention to reduce "zapping." This capability is provided even during simulation of "roadblocking" which is a technique used to simultaneously broadcast the commercial on all the channels so that recall and comprehension can be measured. In addition, a level of perceived quality is readily obtained from the test subject and efficiently processed with the test data.

## Description

This invention is directed to a technique for testing the effectiveness of television commercials and recording the perceived quality of broadcast programming. More particularly, one aspect of the invention can determine whether and when the viewer of a television commercial will "zap" the commercial by turning to programming on another channel even while the commercial is being "roadblocked". Another aspect of the invention facilitates the recording of information inputted by the viewer, and analysis thereof, pertaining to the perceived quality of the programming.

The terms "program" and "programming" as used herein refer to whatever is broadcast to an audience of viewers, including commercial and non-commercial portions. A program is typically "broadcast" by television stations which generate a program signal and then transmit that signal. The program signal can be generated by a television station in the long-known conventional fashion, or it can be stored on a medium distributed to viewers for playback on suitable equipment, such as VCR and DVD. The program signal can originate in other ways as well, even from a website on the Internet from which it can be downloaded by the viewer, for example. The transmission of the programming signal can be by any means including antenna, cable, satellite, modem, and even "transmission" by the distribution of storage media mentioned above. "Television" is used herein as a generic term referring to any technology for receiving, processing and displaying the program signal to a viewer. This can involve real time broadcasts or recorded programs, for the home or elsewhere, and using any and all related technologies, such as for transmission, reception, storing, processing and display. All the relevant terms are used herein in their broadest reasonable meaning.

A "commercial" is anything broadcast for reasons other than information and/or entertainment and, typically, advertises a product for the purpose of getting the viewer to purchase it. Placing commercials on television is expensive. Therefor, advertisers want to know whether the commercial is having the desired impact on viewers. Tests can be conducted to measure such impact. One way such testing is conducted is to actually broadcast the commercial and then telephone test subjects at their homes with a list of questions to check their recall. Unfortunately, this incurs the significant expense of broadcasting the commercial and the concomitant loss of confidentiality which the advertiser may prefer to avoid at the test stage. It is, therefor, highly preferable to test a commercial before it is submitted for broadcast.

Such pre-broadcast tests have long been conducted by soliciting persons to act as test subjects. The commercial is shown to each test subject who is then asked various questions designed to determine the impact, or effectiveness, of the commercial based on how much that person can recall of the information which the advertiser is eager to convey such as, for example, the product and brand name. This approach has been found deficient because the test is not conducted under "normal" viewing conditions. For example, although a person normally has several viewing choices, the test subject does not because the viewing of the commercial is, in effect, forced. Also, the mindset and attitude of the test subject are affected by being placed in a test environment, knowing that a commercial is being tested, and the purpose of the test. These factors tend to skew the results.

Another shortcoming of this approach is its inability to provide a measurement of "holding power". Although such a test does provide a measurement, however flawed, of the total communication potential of the commercial, i.e. impact when viewed in its totality, by exposing the test subject to only one viewing choice it cannot measure "holding power". The latter requires the availability of several choices, and then monitoring whether and when the test subject switches from one channel to programming on other channels. This practice of switching channels to turn away from a commercial is known as "zapping". If the viewer fails to stay on the channel showing the commercial, i.e., the commercial is zapped, then its holding power may be unsatisfactory, particularly if it has failed to hold the viewer's interest long enough to make the desired impression. Therefore, the advertiser's money may be at least partly wasted.

It should be apparent from the above that an important aspect of the testing process for a commercial is to display it under relaxed conditions in a natural environment. The environment should ideally have no abnormal distractions to distort the test results. However, the normal distractions to which the viewer is exposed should be provided. For example, program alternatives to the commercial must be made available if such alternatives normally exist. This prevents an unusual level of concentration on the commercial by the viewer so that distorted results due to artificially created interest are avoided. What is a normal or abnormal distraction can be defined, for example, in terms of the viewer's home since that is a natural, comfortable and relaxed environment. The standard surroundings typically present in a home are preferred, and having the choice of viewing programs on any one of several channels reflects reality.

As desirable as such an environment is, it is not practical to take bulky testing equipment and their surrounding environment door-to-door. An effective approach for providing the above-described measurements for testing the impact of commercials is disclosed in USP 4,647,964 issued to the present inventor on March 3, 1987, the written specification of which is hereby incorporated by reference. Briefly, a test subject is invited to watch television in a comfortable, non-test like setting, and is not informed that his viewing habits are being monitored. This avoids the distortion caused by the effect of knowing that a test is in progress. Also, a choice of programming is offered. In particular, this patent discloses three playback video tape recorders ("VCRs") having their output signals connected to respective inputs of a switch. A viewer-operated switch control determines which VCR output signal will appear at the output of the switch for display on a television screen. Thus, the control switch, which can be like any television remote control device, is used by the viewer to switch among the VCRs, and the signal from the selected "channel" is displayed on the television. This arrangement simulates watching television at home and switching among the available channels. However, the output of the switch is also coupled to a recording VCR which records the entirety of the signal received from the switch output to enable analysis of the viewer's channel selections. The person doing the tape analysis (the "operator") can discern when zapping occurs based on the abrupt transition from a commercial on one VCR to programming on any of the other playback VCRs as he watches playback of the tape in the recording VCR. Thus, the patent provides the test subject with program choices to simulate a normal viewing environment and, in addition, enables a measurement of holding power by monitoring zapping.

One problem with this approach is that the precise point where zapping occurs may be difficult for the operator to identify under some circumstances, which introduces a degree of inaccuracy to the results. Also, it can be laborious to calculate certain information of interest, such as total viewing time, particularly when the viewer returns repeatedly to the same commercial. Total viewing time is of interest because it is considered to be one indication of holding power. Also, one can calculate from the total viewing time what percentage of the audience would view the entire commercial("viewing efficiency"). If 50% of viewers change the channel before completion of the commercial, or at least the significant portions thereof, then only half of the audience attention which was paid for has been obtained.

A broadcasting technique known as "roadblocking" has been developed for the purpose of exposing the viewer to a particular commercial regardless of which channel is selected.
Specifically, the same commercial is broadcast simultaneously on several or even all of the available channels. The use of "roadblocking" is quite expensive since a higher rate is charged by the networks for providing this special service and because multiple broadcasts are required (i.e. on several channels rather than just one).

In view of this practice being brought increasingly into use, it is highly desirable to include it as part of the above-described pre-broadcast testing in order to determine whether the higher expenditure would be worthwhile. An advertiser wants to know the total communication potential when the viewer is exposed to the full commercial. The higher expenditures for . "roadblocking" may be considered worthwhile if the commercial, when viewed in its entirety, has sufficiently high levels of recall, believability and comprehension. However, it is also important to monitor zapping in order to measure holding power so that an advertiser can determine whether a commercial would approach total viewing when broadcast, or whether it would suffer from poor holding power. Thus, a testing approach is needed which combines a simulation of roadblocking with the ability to monitor zapping.

One way to simulate roadblocking with the approach disclosed in the above-mentioned patent is to synchronize all the playback VCRs to show the commercial simultaneously. However, if all the playback VCRs show the same commercial simultaneously, the transition from one to the other due to zapping is seamless. The operator cannot identify when a switch occurs from one to another, i.e. a zap, because the abrupt transition which the operator depends on does not occur. The time when such a zap occurs is important because it provides an indication of where in the commercial the holding power of the commercial failed.

It has also been an aim of advertisers, broadcasters and others to obtain feedback from test subjects about the quality of the program being watched. Test subjects are specifically asked to provide information on whether the viewer liked or disliked the program, would the viewer want to see the program again, whether the viewer never saw the program before or has seen it often, and so on. The viewer is asked to provide this information after the viewing is completed. In such a case, the test subjects need not be informed about this aim until after the program ends, at which time each test subject is asked for a verbal, written or electrically inputted response. However, by relying on the test subject's memory, its adverse effect on accuracy is inherent. Moreover, this approach lends itself more to obtaining generalized opinions about the entire program and less so about specific portions thereof.

Techniques are known which can obtain detailed, specific feedback information from the test subjects while the program is in progress. Each test subject is given a device, such as a dial or set of numbered buttons, with which to enter the information. If the dial or buttons have values which vary from 1 to 5, then the test subject is told to enter 5 for the highest quality and 1 for the lowest quality, for example. This approach has the advantage that it relies less on memory because the information is inputted while the program is being watched. However, it also has some major drawbacks. For example, it can currently only be performed by exposing the test subject continuously to one program from beginning to end, without providing a choice of competing channels. Choice of viewing from among a number of programs is a key element in this type of testing, as explained above. Moreover, this approach cannot monitor zapping. Also, it is complicated and laborious to correlate, process and analyze the results with respect to portions of the program which may be of particular interest.

It is a general object of the invention to provide information regarding the effectiveness of a television commercial on the viewing audience before it is broadcast.

Another object of the invention is to facilitate the recording and analysis of such commercial testing information.

A further object of the invention is to determine the effect of the test commercial in a situation when "roadblocking" is used.

Yet another object of the invention is to provide a test which monitors zapping during roadblocking.

A still further object of the invention is to provide an improved technique for the recording and analysis of information inputted by the viewer pertaining to the perceived quality of a program in a competitive program choice situation.

These and other objects of the invention are attained in accordance with one aspect of the invention directed to testing a broadcast program by monitoring reactions of a person acting as a test subject. A plurality of recorded programs is provided, with the broadcast program that is under test being included among them. Selection is enabled of any one of the plurality of recorded programs for viewing at any time at the choice of the test subject. The plurality of recorded programs are encoded with respective codes. Over a period of time, the codes with which all those of said plurality of recorded programs that have been viewed by the test subject have been encoded are detected, and the codes detected during the period of time are utilized to monitor the program selections made by the test subject.

Another aspect of the invention is directed to determining the perceived quality of a broadcast program by obtaining reactions of a person acting as a test subject. Different program components are encoded with respective codes. The test subject is enabled to generate different signals corresponding to respective levels of perceived quality. The code of each program component viewed by the test subject is detected. The quality signals generated by the test subject are detected, and each of the detected quality signals is associated with the detected code of the program component being viewed when such quality signal was generated.

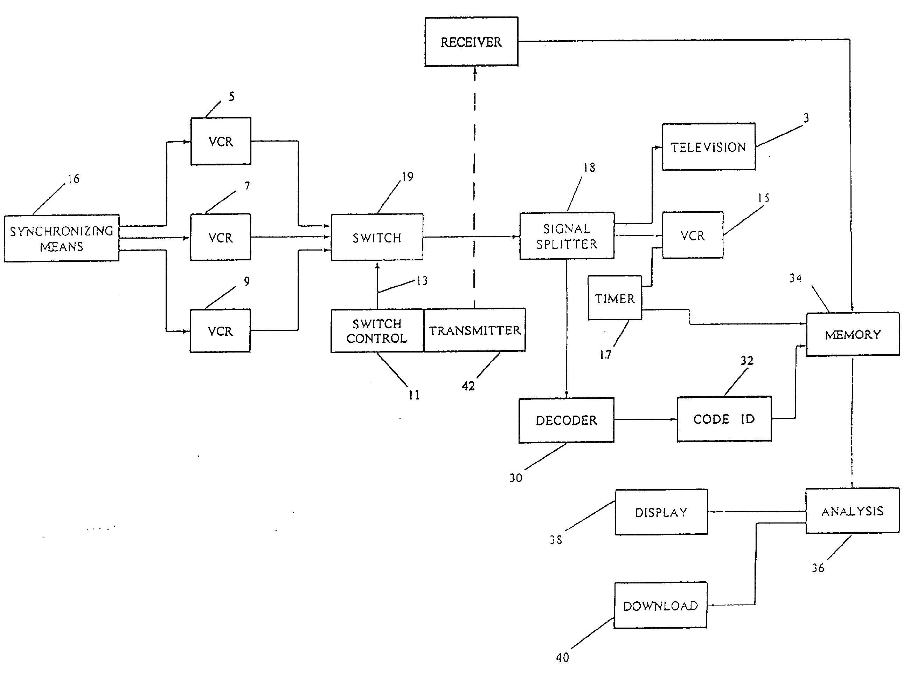

The invention is explained by way of example only in the detailed written description provided below in combination with the enclosed drawing which is a block diagram showing in schematic form an apparatus in accordance with an embodiment of the invention.

Testing of advertisements prior to broadcast can be done in an office serving as a testing studio. Individuals are recruited to be test subjects. Test subjects are screened for characteristics of particular significance for the specific commercial being tested such as sex, age, use of product, location of location of residence, etc. If they have the characteristics sought, they are recruited and brought to the studio. Alternatively, the studio can be brought to the test subjects by, for example, suitably modifying a mobile home. In either case, standard furnishings are used to simulate an average room where television might be viewed in the home. This familiar type of environment puts the test subject at ease and is more likely to produce realistic test results.

The just-described environment includes only one visible item which the invention requires be pointed out to the test subject; namely, a remote control device to change programs on a television screen. This can be a standard wired or wireless remote control 11, for example, or a special switch built for the invention which controls the channel that television 3 displays. The other components of the test apparatus are hidden from view.

The apparatus which monitors and records the actions of the test subject includes television ("TV" hereafter) 3 with a screen and speakers that are placed within view of the test subject. TV 3 receives its programming signals from three VCRs 5, 7 and 9 through switch 19. Switch. 19 is actuated by remote 11 operated by the test subject, and outputs only the signal from that VCR which has been selected with the remote. To the test subject it appears that TV 3 is displaying on-the-air programming and he is simply selecting a channel by operating remote 11. In fact, he is actually selecting from among the prerecorded programs available on the three VCR's 5, 7 and 9. To receive the VCR signals, TV 3 has its tuner set to a given channel to match the VCR outputs, as is conventional.

The test subject has conventional buttons or the like available on remote 11 which can be depressed to make a selection. Line 13 connects remote 11 to switch 19. Line 13 can be an actual wire or it can represent a wireless signal.

The output signal of switch 19 is provided via signal splitter 18 to TV 3. Signal splitter 18 can be a wiring node or an electric circuit, as is well known. Its output is also provided to decoder 30 (described below).

VCR's 5, 7 and 9 are controlled to operate in synchronism with each other by synchronizing means 16. In the preferred embodiment, only the power, play and stop signals are supplied simultaneously from synchronizing means 16 to the three VCR's. The same signal is fed at the same time to all three VCR's so that they all, for example, start tape playback together for a purpose to be explained in detail below. Once started simultaneously, the three VCR's will also run at approximately the same speed to keep the programs playing in synchronism, particularly if the same model of VCR is used for all three.

The starting position of each tape is fixed with a "reset" feature available on quality recorders. More specifically, by depressing a button, the operator records a signal on the tape. After the tape is recorded or played back, it will rewind and then stop at this preset location where the signal has been recorded. It stops the tape within four frames of the preset spot. Thus, the VCR's can be synchronized as to their starting locations, and with their operating characteristics being substantially the same, the tapes will remain in synchronism during playback. An alternative embodiment is available if greater accuracy is required during playback. A digital synchronizing pulse can be provided to a suitably configured VCR from synchronizing means 16. For example, Model FA-410 available from the FOR-A Company, Ltd. is a digital time base corrector which can be used for this purpose. The VCR would, of course, have to include a corresponding sync pulse input.

The programs stored on the tape in each VCR have a commercial portion and a non-commercial portion. In the non-commercial portion, each of the recorders shows a different type of program with the three types having been selected as typical of what appears on television in the evenings, for example. Thus, VCR 5 replays a documentary/news show, VCR 7 replays an entertainment show, and VCR 9 replays a situation comedy. The specific programming just described is not as important in and of itself as is the effort to choose realistic, average, typical programming for the locality where the test is being administered.

In the commercial portion of the programming, each VCR shows the test commercial or commercials of interest. Since commercials are often shown in clusters, the test can also utilize a commercial grouping. Each of these groupings can include one test commercial and three filler commercials. Again, the commercial groupings and the different filler commercials are used to provide a sense of realism to the test. Filler commercials are selected to correspond to the programs in which they appear since certain programs are more likely to show particular commercials.

Each of the three VCR's 5, 7 and 9 includes a recording of the test commercial so positioned on the tape that the three VCR's make it available to the test subject simultaneously. Thus, the commercial will be "roadblocked" because it will appear on TV 3 regardless of which channel is selected by the test subject. This ensures that the test subject is exposed to the commercial so that a meaningful total communication potential test can be performed later to measure recall, believability and comprehension, as explained above.

In accordance with one aspect of the invention, each program being played on VCR's 5, 7 and 9 is encoded with a code unique thereto to assist with monitoring zapping, for example, as explained below. The code can be combined with the video signal or the audio signal, although the latter is preferred. If audio signal encoding is utilized, the encoding technique should be such that when the audio signal is reproduced through speakers the code signal is not audible to the test subject. Otherwise, the noise of the reproduced code could be an annoyance and a distraction, particularly if the noise occurs often as would be the case when insertion of the code is frequent enough to identify zapping as promptly as necessary after it occurs for purposes of the test. A typical gap between code signals can be one second, but a larger gap can be used if time criticality is of a lower order, and vice versa. A number of coding techniques are well known which could be adopted for this purpose. The coding technique should be able to withstand various types of audio signal processing which occur during transmission, reproduction, compression, storage, retrieval and reproduction without loss of reliability and, as pointed out above, while remaining inaudible to the test subject.

Thus, before a program tape is inserted into one of VCR's 5, 7, 9, it is encoded with the code discussed above. Each tape has its own unique code which, therefore, can serve to identify the viewing channel which that tape represents. With this approach, the entire program on that tape is encoded with the same code. By relying on this approach (as explained below), it is possible to identify when zapping occurs even during roadblocking. It is also possible to use other encoding approaches. For example, the same code can be used for all non-commercial portions on a given tape, e.g., the entertainment show on VCR 7. However, each commercial on the tape is encoded with a different, unique code. Thus, a finer degree of monitoring and analysis of viewer behavior is made possible, as explained in greater detail below.

As the output signal from switch 19 is being displayed on TV 3, it simultaneously is being decoded by decoder 30. The circuitry of decoder 30 depends, of course, on the encoding technique being used. However, such encoder/decoder combinations are well known, and details thereof are not deemed necessary. Suffice it to say that decoder 30 decodes the code on the program signal received from switch 19, and inputs that code to code ID circuit 32. Circuit 32 stores a set of codes which are related to the test being conducted, and compares the decoded code against such set. If the detected code matches a stored code in the set, circuit 32 inputs the code to memory 34 which stores this code and/or information related to it. Thus, the binary code can be stored, or the stored information can be a digital number, a program title, or whatever is of interest. Decoder 30 and code ID circuit 32 can be combined as one circuit performing these functions.

Memory 34 can store a sequence of the detected codes, as explained above. These are processed in analysis circuit 36 to provide information such as duration of the first viewing interval (i.e., before the first zap), the total viewing time, and each instant(s) when zapping occurred. This can be derived with or without a timer 17. Specifically, since the interval between successive codes is known, viewing time can be easily calculated by counting the accumulated number of stored codes of interest. Alternately, each stored code can also be time stamped by storing with it the associated time as outputted by timer 17. Information outputted from circuit 36 is available on display 38, and can be transmitted to a remote processing center by download circuit 40.

The actual test can proceed as follows. The test subject may or may not be told that a test is about to begin. A preferred technique in order to obtain good results is to invite him to sit down in what he is told is a waiting room. He is not told that a test is being run but simply that he may watch TV while he is waiting. The remote control is pointed out to him and, if necessary, its operation is explained. Remote control 11, when its ON button is actuated, actuates the three VCR's 5, 7 and 9 to be running simultaneously and in substantial synchronism, and turns on TV 3. The program stored in VCR 5 is shown first, for example, and after awhile a commercial portion appears. The test subject has complete control and, thus, may watch all or part of this commercial portion or switch at any time to one of the other "channels". If the commercial is "roadblocked", then regardless of whether or not he switches away from the test commercial, he will be exposed to it since it is made available simultaneously on all three VCR's. Memory 34 stores all the pertinent codes corresponding to his actions as he switches among the "channels".

After the test subject has completed viewing of the program portions of interest for the test, he can be permitted to continue to view the recorded programming or the system can be turned OFF. In either case, the analysis circuit 36 can be activated to process the information stored in memory 34 and to provide the information of interest promptly for viewing on display 38 and/or for transmittal to a remote location via download circuit 40.

More specifically, the data stored in memory 34 can be a sequence of codes occurring at one second intervals, such as the following.

**TABLE**

| TIME | CODE | TIME | CODE (Cont'd.) |
|---|---|---|---|
| T0 | A | T3 | C |
| : | A | : | C |
| | A | | C |
| | | | : |
| | A | | C |
| T1 | C | T4 | B |
| : | C | : | B |
| | C | | B |
| | | | : |
| | C | | B |
| T2 | B | T5 | A |
| : | B | : | A |
| | : | | A |
| | B | | : |
| | | | A |
| | | | : |

If the codes A, B, C represent VCR's 5, 7, 9 respectively, then it is possible to determine the following types of information quickly and automatically.
1. Transition. The occurrence of a transition is identified by analysis circuit 36 when a code change is detected. A comparison is made between the present code and the one which immediately precedes it. Thus, when the code switches from A to C, for example, a transition (i.e., zap) is detected.
2. Time of transition. The time when a transition occurred from one VCR to another as the test subject switched channels can be determined by counting the number of codes A, for example, which have been stored. If 120 codes A are stored at one second intervals, for example, then the test subject watched the program on VCR 5 for two minutes between the start time T0 and the first transition T1. The two minute viewing interval can be combined with known data about the program timing to determine precisely at what point in the program zapping occurred. For example, data can be stored in another memory (not shown) to identify the time at which certain key segments of the program occur. This can be combined with data from analysis circuit 36 so that the exact point or at least the segment of a commercial when it was zapped can be identified. Of course, the use of timer 17 is also possible in a well known manner.
   In the Table presented above, the data in the Time column can be obtained directly from the timer 17 or it can be calculated from the number of detected codes, as described above.
3. Identification. The code is uniquely pre-assigned to the programming portion or portions of interest. Thus, code A can be identified with all the programming on a "channel", with either a commercial portion or a non-commercial portion, or with a segment of any of the above. The correlation between the codes and what they respectively represent can be stored in any one of code ID circuit 32, memory 34, analysis circuit 36 or even another circuit, device or storage media. The relationship can be in the form of a table, for example. A key requirement is for the relationship to be available as a resource for analysis circuit 36 so that the code is converted into human intelligible information for input to display 38.
4. Viewing duration. The duration of each viewing interval, such as for code C, can be readily determined by subtracting the number of stored codes at T1, for example, from that at T2 to derive the number of stored codes for the interval, and multiplying that number by the time each gap between codes represents. Of course, the use of timer 17 is also possible in a well known manner.
5. Total viewing time.
   This is readily obtainable by totalling all the viewing durations for a given code. Thus, for code C the total viewing time would be (T2-T1) + (T4-T3).

If a code is assigned to the entire non-commercial portion and different codes are assigned to each different commercial portion, the following information is obtainable:
1. Holding power of the non-commercial portion.
2. Holding power of each commercial.
3. When zapping of the non-commercial and commercial portions occurred.
4. Early warning of "wearout", where viewers lose interest in the commercial with subsequent exposures and zap it at progressively earlier points in the commercial.

It is also possible to assign a different code to sub-segments of the non-commercial and/or commercial portions. Thus, a commercial can be divided into segments, each of which is assigned its own unique code. The following information is readily and automatically obtainable with this approach:
1. Holding power of key segments.
2. Total viewing time of key segments.
3. For roadblocking, correlation of voluntary viewing (i.e. before zap) and involuntary viewing (i.e. post zap) with recall (e.g. if post-zap segment is remembered, perhaps it should be placed earlier, particularly if it is a key component).

The invention is highly flexible in terms of how codes are used and assigned to the different "channels", and to the portions of the programming, and sub-segments thereof, on each "channel". By assigning a code to large program components, analysis results are obtainable on a relatively gross scale. On the other hand, results on a very fine scale can also be obtained if a code is assigned to very specific and small program components. The possibilities in choosing the level of detail desired are limited only by such factors as the specific needs of the advertiser, the time and the cost of setting up the code structure, the memory capacity available, the processing time required to do the analysis, and the like. However, if such practical concerns are mitigated by the importance of the programming being tested and/or advancements in technology, the principles of the invention can be readily applied broadly, flexibly and effectively to provide a high level of detailed information.

The output of signal splitter 18 can also be provided to recording VCR 15 which tapes it to record all the programming selections made by the test subject. When the tape is played back, it displays precisely what the subject viewed and, thus, provides information on the test subject's selection of programming. In order to provide time information relative to the selected programming for analysis of the test results, a suitable timer 17 is connected to VCR 15. The output of timer 17 is, therefore, also recorded by the VCR and is displayable along with the programs from TV 3 recorded by it. It may not be desirable to display time on TV 3 because it could be a distraction to the test subject. The VCR 15 is not required for implementing the present invention which relies instead on circuits 30, 32, 34 and 36. However, VCR 15 can be useful in case one of such circuits fails to provide a fallback capability to monitor and record the test subject's viewing behavior for later analysis.

Analysis of the test results by the operator can proceed by manually playing back the tape on VCR 15 and attempting to visually detect transitions. When transitions are identifiable by the operator, it is possible to determine, for example, how much total time the test subject viewed the test commercial, whether he returned to it more than once, at what point(s) he switched away, and the difference if any caused by the order in which the test commercial was placed in the commercial grouping.

Up to this point, the invention has been explained primarily in terms of detecting code transitions and processing that information to obtain significant information about, for example, holding power. However, it should also be mentioned that the roadblocking simulation is also utilized to great advantage. After the test has been completed, the test subject is informed that he participated in a test. He is then asked a series of questions designed to assess the total communication potential of the roadblocked commercial based on, for example, his recall and comprehension of what he saw. Also, he can be asked the reason for his monitored actions to shed further light on the effect of the commercial. This post-test questioning does not constitute a part of the invention and, in any case, is well known. Thus, details thereof are not deemed necessary.

It should be clear from the above that the invention provides the capability of simulating roadblocking while, at the same time, providing a powerful, flexible, effective technique to reliably detect zapping. Programming can thus be tested efficiently for not only its total communication potential, but its holding power as well. Moreover, the test results can be performed automatically and made available promptly on display 38, for example.

The drawing figure also depicts transmitter 42 and receiver 44. Transmitter 42 can be separate from or part of remote control 11. It transmits a signal indicative of a perceived level of quality. For example, transmitter 42 is provided with numbered buttons to enable the selection of a quality level and to transmit a quality signal by depressing the corresponding button. This signal is detected by receiver 44 and its output is provided to memory 34. The quality signal is stored in memory 34 so that it is associated with the test code stored therein for the program then being viewed so that the test code and the quality signal can be retrieved, processed and analyzed in relationship to each other. It is thus possible to obtain quality feedback for a test involving multiple, selectable program sources. More specifically, the following information about perceived quality is readily and automatically obtainable:
1. Average level of quality for entire program.
2. Level of quality for commercial and/or non-commercial program portions.
3. Level of quality for actor and story line segments of program portions if they are assigned different codes. (Especially important for TV-pilot programs, for example.)

By storing the selected quality level, generated by the test subject at any given time, in association with the test code of the program portion then being viewed, it is possible to automatically, efficiently, quickly and effectively analyze the level of quality data per each code or across several codes. For example, if a code is assigned to a particular actor, then an average level of quality for him can be obtained. By assigning a code to an entire program, the same analysis can be readily obtained for it. Alternatively, it is also possible to obtain a level of quality for an entire program by assigning codes to different respective segments thereof, calculating the results for each code to obtain the level of quality associated with its respective segment, and then combining these results to derive a level of quality for the entire program.

With the powerful techniques of the invention, very valuable information can be promptly gathered and analyzed, and at reasonable cost because it is automated. Before the commercial is broadcast, it can be tested discreetly in selected geographic locations and with a screened group of test subjects. This enables results to be obtained that are suitably focused on a target audience, within a time frame, and under conditions so as to provide a significant competitive advantage. A test can measure the impact of the components which constitute the test commercial to see whether any should be changed or excised to improve recall, believability and comprehension. The test can also readily obtain the perceived level of quality. The invention improves the accuracy, speed and convenience with which such information is detected, stored, processed and displayed. Although a preferred embodiment of the invention has been disclosed above in detail, a number of changes will be readily apparent. For example, the tuner of TV 3 and its channel display can be changed by the switch control 11 to correspond to a certain local channel when a particular one of the VCR's is selected by the test subject, instead of being connected to a switch which in turn has its output connected to the TV. Actuation of a button on the switch will tune in the signal from the corresponding VCR to the TV. Also, timer 17 need not be connected, as shown. Other arrangements are available which allow its output to be synchronized with VCR's 5, 7 and 9 and to have its output displayed on VCR 15. In addition, more than three VCR's can be used. Also, the multiple programs can all be stored on a single medium such as a magnetic or optical disk, perhaps with plural heads. Yet another possible change would have only non-commercial programming recorded on VCR's 5, 7 and 9 with all the commercials being recorded on another VCR. The latter would be activated and its output displayed under control of a signal recorded on the tapes in VCR's 5, 7 and 9. This approach adds the flexibility of changing either the commercial or non-commercial programming without affecting the other. Also, memory 34 can store all the codes decoded by circuit 30, and the function of code ID circuit 32 could be applied to all codes retrieved from the memory. Of course, the code ID function could also be incorporated into the analysis 36. In addition, it should be understood that although the invention has been described above primarily with respect to testing of "commercials" by "advertisers", any and all types of programming lend themselves to have the invention applied thereto. Moreover, all or some of the circuitry and components depicted in the drawing can be implemented on a more general purpose computer running suitable programs. Another modification can perform the test results while the test is in progress. Although in the detailed description provided above the analysis by circuit 36 is performed automatically at the conclusion of the test when all the test results have been stored, in actuality the analysis could be performed practically in real time, with the results shown on display 38, and then updated at selected intervals or as new data is received. Moreover, although the testing and analysis have been described with one test subject at a time, the invention can readily be applied to multiple test subjects concurrently in terms of processing and/or combining their test results. This could be done in real time with several test subjects being tested individually in their own "environments", it could be done after completion of such tests, and it could be done for an entire audience of test subjects being tested together in the same environment, if that is deemed to be suitable for the purposes of any particular test. All these and other such changes are intended to fall within the scope of the invention as defined by the following claims.

## Claims

1. A method for testing a broadcast program by monitoring reactions of a person acting as a test subject, comprising the steps of:
providing a plurality of recorded programs with the broadcast program that is under test being included among said plurality of recorded programs, said plurality of recorded programs being encoded with respective codes;
enabling any one of the plurality of recorded programs to be selectable for viewing at any time at the choice of the test subject;
over a period of time, detecting the codes with which all those of said plurality of recorded programs that have been viewed by the test subject have been encoded; and
utilizing the codes detected during said period of time to monitor the program selections made by the test subject.

2. The method of claim 1, wherein the plurality of recorded programs simulate a plurality of corresponding television channels.

3. The method of claim 2, wherein the step of enabling program selection for viewing includes providing the test subject with the capability to control the selection to simulate tuning to a particular television channel.

4. The method of claim 3, wherein each of said plurality of recorded programs includes at least one of a commercial portion and a non-commercial portion.

5. The method of claim 4, wherein at least a portion of each of said plurality of recorded programs is encoded with a unique code relative to codes encoded on others of said plurality of recorded programs.

6. The method of claim 5, wherein a portion of one of said plurality of recorded programs is encoded with a unique code relative to codes encoded on other portions of said one recorded program.

7. The method of claim 4, wherein said commercial portion includes one commercial.

8. The method of claim 7, wherein different segments of said one commercial are encoded with respectively unique codes.

9. The method of claim 4, wherein at least one of said plurality of recorded programs has a plurality of commercials, and each of said commercials is encoded with a unique code.

10. The method of claim 4, wherein different segments of said non-commercial portion are encoded with respectively unique codes.

11. The method of claim 1, wherein the step of utilizing the detected codes includes determining when said test subject switches from viewing any one of said plurality of recorded programs to another.

12. The method of claim 1, wherein the step of utilizing the detected codes includes determining a time duration during which the test subject viewed an encoded component of a selected one of said plurality of recorded programs before switching to an encoded component of another one of said plurality of recorded programs.

13. The method of claim 1, wherein the step of utilizing the detected codes includes determining total viewing time by the test subject during said period of time for an encoded component of a selected one of said plurality of recorded programs.

14. The method of claim 1, wherein the step of detecting the codes includes storing the detected codes in memory, and the utilizing step includes retrieving said codes from said memory.

15. The method of claim 14, wherein the utilizing step comprises automatically retrieving all the stored codes from memory, detecting each transition from one of said codes to another, processing the detected transitions by computer, and displaying the result.

16. The method of claim 1, further comprising the steps of enabling the test subject to generate a quality signal indicative of a perceived quality of whichever program is being viewed, detecting the quality signal, and associating the detected quality signal with the code detected when said quality signal is generated.

17. The method of claim 1, wherein the encoding step encodes an audio signal of said recorded programs.

18. The method of claim 1, wherein at least a portion of each of said plurality of recorded programs is encoded with a unique code relative to codes encoded on others of said plurality of recorded programs.

19. The method of claim 1, wherein the step of utilizing the detected codes comprises measuring holding power.

20. The method of any one of claims 1 to 19 including the step of encoding the plurality of recorded programs with respective codes.

21. A method for determining perceived quality of a broadcast program by obtaining reactions of a person acting as a test subject to programs in which different program components are encoded with respective codes, comprising the steps of:
enabling the test subject to generate different signals corresponding to respective levels of perceived quality;
detecting the code of each program component viewed by the test subject;
detecting the quality signals generated by the test subject; and
associating each of the detected quality signals with the detected code of the program component being viewed when such quality signal was generated.

22. The method of claim 21, wherein the enabling step enables the test subject to generate the quality signals at any time during a testing period.

23. The method of claim 21, further comprising the step of processing all the detected quality signals associated with each one of said codes to determine the level of perceived quality for the respective encoded program components.

24. The method of any one of claims 21 to 23, including the step of encoding different program components with said respective codes.

25. An apparatus for testing a broadcast program by monitoring reactions of a person acting as a test subject, comprising:
means for providing a plurality of recorded programs with the broadcast program that is under test being included among said plurality of recorded programs, the plurality of recorded programs being encoded with respective codes;
means for enabling any one of the plurality of recorded programs to be selectable for viewing at any time at the choice of the test subject;
means for, over a period of time, detecting the codes with which all those of said plurality of recorded programs that have been viewed by the test subject have been encoded; and
means for utilizing the codes detected during said period of time to monitor the program selections made by the test subject.

26. An apparatus according to claim 25, including means for encoding the plurality of recorded programs with respective codes.

27. Apparatus for determining perceived quality of a broadcast program by obtaining reactions of a person acting as a test subject to programs in which different program components are encoded with respective codes, comprising:
means for enabling the test subject to generate different signals corresponding to respective levels of perceived quality;
means for detecting the code of each program component viewed by the test subject;
means for detecting the quality signals generated by the test subject; and
means for associating each of the detected quality signals with the detected code of the program component being viewed when such quality signal was generated.

28. An apparatus according to claim 27 including means for encoding different program components with said respective codes.
